# EUROPÄISCHE PATENTSCHRIFT

(11) **EP 3 665 397 B1**
(45) Veröffentlichungstag und Bekanntmachung des Hinweises auf die Patenterteilung: **01.11.2023**
(21) Anmeldenummer: 18750318.0
(22) Anmeldetag: 17.07.2018
(51) Int. Cl.: F16D 13/58, F16D 13/38, F16D 13/70

(54) **SELBSTVERSTÄRKENDE REIBUNGSKUPPLUNG MIT BLATTFEDERN**
SELF-REINFORCING FRICTION CLUTCH HAVING LEAF SPRINGS
EMBRAYAGE À FRICTION AUTO-RENFORÇANT COMPRENANT DES RESSORTS À LAMES

(30) Priorität: 08.08.2017 DE 102017118026; 15.11.2017 DE 102017126799
(43) Veröffentlichungstag der Anmeldung: 17.06.2020
(73) Patentinhaber: Schaeffler Technologies AG & Co. KG, 91074 Herzogenaurach (DE)
(72) Erfinder: RABER, Christoph, 66564 Ottweiler-Steinbach (DE)
(86) Internationale Anmeldenummer: PCT/DE2018/100652
(87) Internationale Veröffentlichungsnummer: WO 2019/029766

(56) Entgegenhaltungen:
- DE-A1-102014 224 947
- DE-A1-102016 201 525
- DE-A1-102016 218 354
- GB-A- 1 351 891
- US-A- 5 758 756

## Beschreibung

Die vorliegende Erfindung betrifft eine Reibungskupplung mit (innenliegenden) Blattfedern, insbesondere innerhalb der Anpressplattennocken angeordneten Blattfedern, die zur Selbstverstärkung der Reibungskupplung an Zungen der Tellerfeder angebunden sind.

Die Erfindung betrifft insbesondere eine Reibungskupplung, die zum Kuppeln einer Antriebswelle eines Kraftfahrzeuges (z. B. ein PKW, LKW oder Motorrad) mit einer Getriebeeingangswelle eines Getriebes geeignet ist, wobei die Reibungskupplung zusätzlich eine Gegenplatte aufweist und die Anpressplatte zum reibschlüssigen Verpressen einer Kupplungsscheibe zwischen der Gegenplatte und der Anpressplatte vorgesehen ist.

Die Erzeugung der Anpresskraft heutiger Trockenkupplungen geschieht in der Regel mittels Tellerfeder oder Druckfeder. Diese werden in der Regel auf das maximal auftretende Motormoment (plus Sicherheit) ausgelegt, um eine sichere Momentenübertragung zwischen Verbrennungsmotor und Getriebe zu gewährleisten. Die Kraft, die die Teller- oder Druckfeder auf die Anpressplatte ausübt, korreliert mit der Betätigungskraft der Kupplung. Große Motormomente erfordern demnach große Anpresskräfte, was sich somit in hohen Betätigungskräften äußert. Bekannt sind selbstverstärkende Reibungskupplungen, die große Anpresskräfte bei vergleichsweise moderaten Betätigungskräften ermöglichen.

Die Druckschriften DE 10 2016 218354 A1, DE 10 2014 224947 A1, DE 10 2016 201525 A1 und GB 1 351 891 A zeigen Beispiele für solche Reibungskupplungen, Hiervon ausgehend liegt der vorliegenden Erfindung die Aufgabe zugrunde, die in dem Stand der Technik entdeckten Nachteile zumindest teilweise zu überwinden und eine Reibungskupplung vorzuschlagen, bei der eine Selbstverstärkung einer Reibungskupplung erhöht werden kann.

Diese Aufgabe wird gelöst mit einer Reibungskupplung gemäß den Merkmalen des unabhängigen Anspruchs. Weitere vorteilhafte Ausgestaltungen der Erfindung sind in den abhängig formulierten Ansprüchen angegeben. Die in den abhängig formulierten Ansprüchen einzeln aufgeführten Merkmale sind in technologisch sinnvoller Weise miteinander kombinierbar und können weitere Ausgestaltungen der Erfindung definieren. Darüber hinaus werden die in den Ansprüchen angegebenen Merkmale in der Beschreibung näher präzisiert und erläutert, wobei weitere bevorzugte Ausgestaltungen der Erfindung dargestellt werden.

Es wird eine Reibungskupplung vorgeschlagen mit einer, die Reibungskupplung einrückenden Tellerfeder, einem Kupplungsdeckel, und einer in axialer Richtung begrenzt verlagerbaren, durch Blattfedern drehfest an den Kupplungsdeckel angebundenen Anpressplatte, wobei die Blattfedern in axialer Richtung fest an Zungen der Tellerfeder angebunden sind.

Die Blattfedern erstrecken sich zwischen einem ersten Ende und einem zweiten Ende zumindest entlang einer Umfangsrichtung und entlang einer axialen Richtung. Die Blattfedern sind insbesondere einzeln oder in Paketen (also mehrere Blattfedern aufeinander gestapelt) entlang der Umfangsrichtung verteilt (insbesondere in gleichen Abständen) angeordnet.

Insbesondere sind die Blattfedern in radialer Richtung innerhalb von Anpressplattennocken angeordnet sind, auf denen sich die Tellerfeder verkippbar zum Ein- und Ausrücken der Reibungskupplung abstützt.

Insbesondere sind bei der Reibungskupplung, vorzugsweise einer trockenen Motorradkupplung, die Blattfedern, durch die die Anpressplatte drehfest (ggf. unter einem gewissen Freiwinkel) an den Kupplungsdeckel angebunden ist, in radialer Richtung innerhalb der Anpressplattennocken angeordnet. Die Blattfedern, vorzugsweise Enden der Blattfedern, sind in axialer Richtung fest (unmittelbar oder mittelbar z. B. über ein Druckstück) mit den Zungen der Tellerfeder verbunden, um im Zugbetrieb des Verbrennungsmotors eine die Reibungskupplung einrückende Kraft auf die Zungen der Tellerfeder auszuüben, und im Schubbetrieb des Verbrennungsmotors eine die Reibungskupplung ausrückende Kraft auf die Zungen der Tellerfeder auszuüben.

Bevorzugt erfolgt die drehfeste Anbindung der Anpressplatte an den Kupplungsdeckel unter einem gewissen Freiwinkel erfolgt.

Der Freiwinkel bezeichnet insbesondere einen Winkel, um den Anpressplatte und Kupplungsdeckel relativ zueinander in einer Umfangsrichtung verdreht werden können.

Kern der Erfindung ist somit die in axialer Richtung feste, mittelbare oder unmittelbare Anbindung der Blattfedern an die Zungen der Tellerfeder.

Es können zwei Gruppen von Blattfedern vorgesehen sein, nämlich kupplungsdeckelseitige (erste Gruppe) und anpressplattenseitige (zweite Gruppe) Blattfedern, die miteinander über ein Druckstück verbunden sind, in dem die Zungen der Tellerfeder axialfest aufgenommen sind.

Die vorliegende Erfindungsmeldung beschreibt ein selbstverstärkendes Prinzip, das dazu dient, die Anpresskraft mit Hilfe eines im Folgenden beschriebenen, selbstverstärkenden Mechanismus zu erhöhen. Des Weiteren dient dieses Prinzip ebenso zur Reduktion des maximal übertragbaren Schubmoments der Kupplung. Dieses ist vor allem beim Einsatz einer solchen Trockenkupplung im Motorradbereich wichtig.

Die Umsetzung dieser Kraftverstärkung beruht auf dem Blattfeder-Prinzip. Das Prinzip wird hier so angeordnet, dass das Übersetzungsverhältnis der Kupplung zur Selbstverstärkung genutzt werden kann.

Um in einer Einscheiben-Trockenkupplung relevante Verstärkungen zu realisieren, wäre es notwendig, den Verstärkungswinkel der Blattfedern extrem zu erhöhen. Um zwischen Zug- und Schubmoment einen Faktor größer 2 zu realisieren, müsste ein Winkel zwischen 70° (Winkelgrad) und 75° konstruktiv umgesetzt werden, um beispielsweise im Zug 170 Nm ([Newtonmeter]) und im Schub 80 Nm zu übertragen.

Ein solcher Winkel hat jedoch zur Folge, dass im Schub das Moment nicht mehr übertragen werden kann. Es gibt denkbare Lösungen, mit Blattfedern für beide Richtungen und einem großen Freiwinkel der Anpressplatte zwischen Zug und Schub.

Die oben beschriebenen Problemstellungen sind sehr gut lösbar, wenn das Übersetzungsverhältnis zusätzlich zur Verstärkung genutzt werden kann. Die Übersetzung wird genutzt, indem in Zugrichtung die Kupplung über die Zungen weiter eingerückt und in Schubrichtung die Kupplung über die Zungen ausgerückt wird. Diese zusätzliche Zug- bzw. Druckkraft wird über das Prinzip der Blattfederverstärkung realisiert.

Die geringen Verstärkungswinkel der Blattfedern werden dabei durch das Übersetzungsverhältnis der Kupplung kompensiert.

Im bevorzugten Ausführungsbeispiel gibt es ein anpressplattenseitiges Druckstück (zweite Druckstückscheibe), das über (eine) anpressplattenseitige (zweite Gruppe von) Blattfedern (ggf. unter einem gewissen Freiwinkel) drehfest an der Anpressplatte angebunden ist, und ein kupplungsdeckelseitiges Druckstück (erste Druckstückscheibe), das über (eine) kupplungsdeckelseitige (erste Gruppe von) Blattfedern (ggf. unter einem gewissen Freiwinkel) drehfest am Kupplungsdeckel angebunden ist.

Die Blattfedern einer ersten Gruppe können mit einem ersten Ende an dem Kupplungsdeckel und mit einem zweiten Ende an jeweils einer ersten Anbindung an dem Druckstück angebunden sein. Die Blattfedern einer zweiten Gruppe können mit einem ersten Ende an der Anpressplatte und mit einem zweiten Ende an jeweils einer zweiten Anbindung an dem Druckstück angebunden sein.

Die ersten Anbindungen und die zweiten Anbindungen können entlang der axialen Richtung zwischen der Anpressplatte und dem Kupplungsdeckel angeordnet sein.

Insbesondere kann sich jede Blattfeder der ersten Gruppe von dem ersten Ende hin zu dem zweiten Ende (jeder Blattfeder der ersten Gruppe) entlang einer ersten Umfangsrichtung und sich jede Blattfeder der zweiten Gruppe von dem ersten Ende hin zu dem zweiten Ende (jeder Blattfeder der zweiten Gruppe) entlang einer (gleichgerichteten) ersten Umfangsrichtung erstrecken.

Insbesondere können sich die Blattfedern der ersten Gruppe zwischen dem ersten Ende und dem zweiten Ende (jeder Blattfeder der ersten Gruppe) in der axialen Richtung unter einem maximalen ersten Winkel gegenüber einer Umfangsrichtung erstrecken und sich die Blattfedern der zweiten Gruppe zwischen dem ersten Ende und dem zweiten Ende (jeder Blattfeder der zweiten Gruppe) in der axialen Richtung unter einem maximalen zweiten Winkel gegenüber einer Umfangsrichtung erstrecken, wobei der erste Winkel und der zweite Winkel gleich groß sind.

Der maximale Winkel (unabhängig davon, ob der erste Winkel und der zweite Winkel gleich groß sind) beträgt insbesondere zwischen 5 und 45 Winkelgrad, bevorzugt zwischen 5 und 30 Winkelgrad, besonders bevorzugt zwischen 5 und 20 Winkelgrad.

Das Druckstück kann (zumindest) aus einer ersten Druckstückscheibe und einer zweiten Druckstückscheibe besteht, die miteinander (z. B. über Nieten) verbunden sind, wobei die Zungen der Tellerfeder entlang der axialen Richtung zwischen der ersten Druckstückscheibe und der zweiten Druckstückscheibe angeordnet sind.

Insbesondere sind die Blattfedern über Niete (ggf. über die Niete, die zur Verbindung der Druckstückscheiben vorgesehen sind) mit dem Druckstück bzw. der jeweiligen Druckstückscheibe verbunden.

Die Tellerfeder kann zum Verlagern der Anpressplatte über das Druckstück betätigbar sein.

Insbesondere ist das Druckstück mit einer Nabe verbunden, an der die Druckstückscheiben axialfest angeordnet sind. Insbesondere kann das Druckstück (und über das Druckstück die Tellerfeder) über die Nabe betätigt werden.

Die Anpressplatte leitet ihr Drehmoment über Blattfeder (zweite Gruppe von Blattfedern) in das mit Bezug auf die beigefügten Figuren unterhalb der Anpressplatte liegende, d.h. anpressplattenseitige Druckstück (zweite Druckstückscheibe), ein. Dieses Drehmoment wird über die Nietköpfe der anpressplattenseitigen Blattfedervernietung in das kupplungsdeckelseitige Druckstück (erste Druckstückscheibe), das mit Bezug auf die beigefügten Figuren unterhalb der Tellerfeder angeordnet ist, eingeleitet. Dieses Druckstück (erste Druckstückscheibe) ist über kupplungsdeckelseitige Blattfedern (erste Gruppe von Blattfedern) am Kupplungsdeckel befestigt. Innerhalb dieses, im bevorzugten Ausführungsbeispiel, zweiteiligen Druckstücks sind die Zungen der Tellerfeder in axialer Richtung fest aufgenommen und somit axialfest mittelbar an die Enden der anpressplattenseitigen und kupplungsdeckelseitigen Blattfedern angebunden.

Im dargestellten Ausführungsbeispiel handelt es sich um eine trockene Motorradkupplung, bei der der Kupplungsdeckel gleichzeitig einen Teil der Schwungradmasse bildet.

Beide Druckstücke (Druckstückscheibe) sind in der Drehmitte über ein zusätzliches Bauteil (Nabe) axial über eine, vorzugsweise zerstörungsfrei lösbare, Verbindung verbunden. Der Momentenfluss der beiden Druckstücke könnte auch über das zusätzliche Bauteil erfolgen.

Die Blattfederwinkel sind so gewählt, dass sie möglichst gleich und entgegengesetzt wirken. In Zugrichtung wirken die erzeugten Axialkräfte der Blattfederpakete in die gleiche Richtung und drücken die Kupplung weiter zu, d.h. üben eine selbstverstärkende Kraft in Einrückrichtung aus. In Schubrichtung wirken die erzeugten Axialkräfte der Blattfedern in die gleiche Richtung und ziehen die Kupplung auf, d.h. rücken die Kupplung aus.

Der möglichst gleiche Winkel (erster Winkel, zweiter Winkel) der Blattfedern ist von Vorteil, um die Relativwege der beiden Blattfedergruppen (anpressplattenseitige Blattfedern - zweite Gruppe - und kupplungsdeckelseitige Blattfedern - erste Gruppe) möglichst gleich zu halten.

Die entgegengesetzte Anordnung ermöglicht, den Summenweg nahe Null zu halten. Im dargestellten Ausführungsbeispiel ist eine Kupplung mit gezogener Tellerfeder gezeigt, die durch die Getriebeeingangswelle betätigt wird. Vom Prinzip ist es aber auch möglich, das Konzept auf normal-eingerückte, aufgedrückte Kupplungen zu übertragen, bei denen üblicherweise der Kupplungsdeckel mit dem Schwungrad, das gleichzeitig die Gegendruckplatte der Kupplung bildet, idealerweise der Sekundärseite eines Zweimassenschwungrads, verschraubt ist.

Vorsorglich sei angemerkt, dass die hier verwendeten Zahlwörter ("erste", "zweite",...) vorrangig (nur) zur Unterscheidung von mehreren gleichartigen Gegenständen, Größen oder Prozessen dienen, also insbesondere keine Abhängigkeit und/oder Reihenfolge dieser Gegenstände, Größen oder Prozesse zueinander zwingend vorgeben. Sollte eine Abhängigkeit und/oder Reihenfolge erforderlich sein, ist dies hier explizit angegeben oder es ergibt sich offensichtlich für den Fachmann beim Studium der konkret beschriebenen Ausgestaltung.

Die Erfindung sowie das technische Umfeld werden nachfolgend anhand der Figuren näher erläutert. Es ist darauf hinzuweisen, dass die Erfindung durch die gezeigten Ausführungsbeispiele nicht beschränkt werden soll. Insbesondere ist es, soweit nicht explizit anders dargestellt, auch möglich, Teilaspekte der in den Figuren erläuterten Sachverhalte zu extrahieren und mit anderen Bestandteilen und Erkenntnissen aus der vorliegenden Beschreibung und/oder Figuren zu kombinieren. Insbesondere ist darauf hinzuweisen, dass die Figuren und insbesondere die dargestellten Größenverhältnisse nur schematisch sind. Gleiche Bezugszeichen bezeichnen gleiche Gegenstände, so dass ggf. Erläuterungen aus anderen Figuren ergänzend herangezogen werden können. Es zeigen:
- Fig. 1:: eine Reibungskupplung zusätzlich mit Gegenplatte und Kupplungsscheibe in einer Ansicht entlang der Drehachse;
- Fig. 2:: die Reibungskupplung nach Fig. 1 in einer Seitenansicht im Schnitt;
- Fig. 3:: die Reibungskupplung nach Fig. 1 in einer Ansicht entlang der Drehachse;
- Fig. 4:: die Reibungskupplung nach Fig. 3 in einer Seitenansicht im Schnitt;
- Fig. 5:: die Reibungskupplung nach Fig. 3 und 4 in einer Seitenansicht im Schnitt im Zugbetrieb;
- Fig. 6:: eine Detailansicht der Fig. 5;
- Fig. 7:: die Reibungskupplung nach Fig. 3 und 4 in einer Seitenansicht im Schnitt im Schubbetrieb; und
- Fig. 8:: eine Detailansicht der Fig. 7.

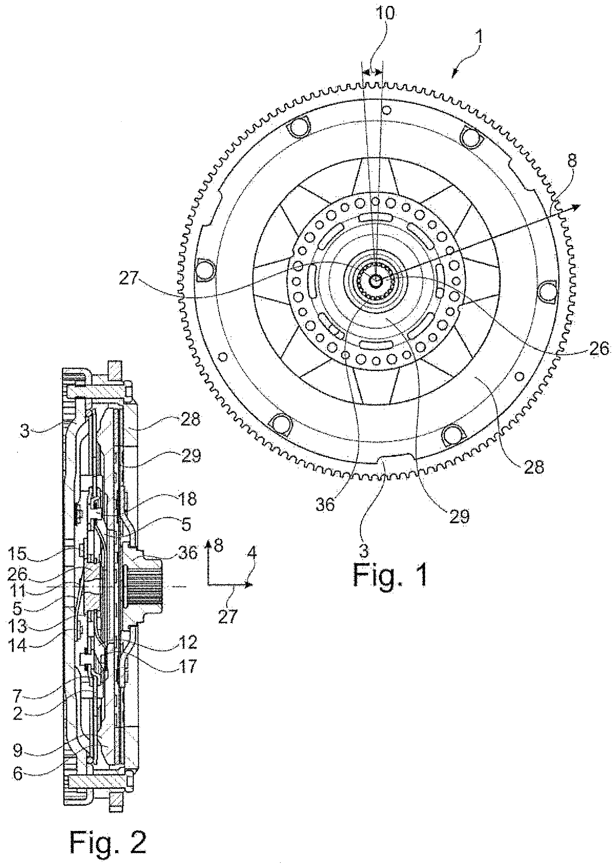

Die Fig. 1 zeigt eine Reibungskupplung 1 zusätzlich mit Gegenplatte 28 und Kupplungsscheibe 29 in einer Ansicht entlang der Drehachse 27. Fig. 2 zeigt die Reibungskupplung 1 nach Fig. 1 in einer Seitenansicht im Schnitt. Die Fig. 1 und 2 werden im Folgenden gemeinsam beschrieben.

Die Reibungskupplung 1 weist zusätzlich eine Gegenplatte 28, wobei die Anpressplatte 6 zum reibschlüssigen Verpressen der Kupplungsscheibe 29 zwischen der Gegenplatte 28 und der Anpressplatte 6 vorgesehen ist.

Die Reibungskupplung umfasst eine einrückende Tellerfeder 2, einen Kupplungsdeckel 3 (hier mit dem Schwungrad und der Gegenplatte 28 verschraubt), und eine in axialer Richtung 4 begrenzt verlagerbare, durch Blattfedern 5 drehfest an den Kupplungsdeckel 3 angebundene Anpressplatte 6, wobei die Blattfedern 5 in axialer Richtung 4 fest an Zungen 7 der Tellerfeder 2 angebunden sind.

Die Blattfedern 5 erstrecken sich zwischen einem ersten Ende 14, 17 und einem zweiten Ende 15, 18 zumindest entlang einer Umfangsrichtung 20, 21 und entlang einer axialen Richtung 4. Die Blattfedern 5 sind in radialer Richtung 8 innerhalb von Anpressplattennocken 9 angeordnet, auf denen sich die Tellerfeder 2 verkippbar zum Ein- und Ausrücken der Reibungskupplung 1 (also zum Verlagern der Anpressplatte 6 entlang der axialen Richtung 4) abstützt.

Die Blattfedern 5, hier jeweils die zweiten Enden 15, 18 der Blattfedern 5, sind in axialer Richtung 4 über das Druckstück 13 fest mit den Zungen 7 der Tellerfeder 2 verbunden, um im Zugbetrieb 31 des Verbrennungsmotors (beschleunigendes Drehmoment wird über den Kupplungsdeckel 3 auf die Anpressplatte 6 und die Gegenplatte 28 und von diesen auf die Kupplungsscheibe 29 übertragen) eine die Reibungskupplung 1 einrückende Kraft auf die Zungen 7 der Tellerfeder 2 auszuüben, und im Schubbetrieb 30 des Verbrennungsmotors (Kupplungsdeckel 3 wird von der Kupplungsscheibe 29 angetrieben) eine die Reibungskupplung 1 ausrückende Kraft auf die Zungen 7 der Tellerfeder 2 auszuüben.

Die drehfeste Anbindung der Anpressplatte 6 an den Kupplungsdeckel 3 erfolgt unter einem gewissen Freiwinkel 10.

Im dargestellten Ausführungsbeispiel ist eine Reibungskupplung 1 mit gezogener Tellerfeder 2 gezeigt, die durch die Getriebeeingangswelle 36 betätigt wird.

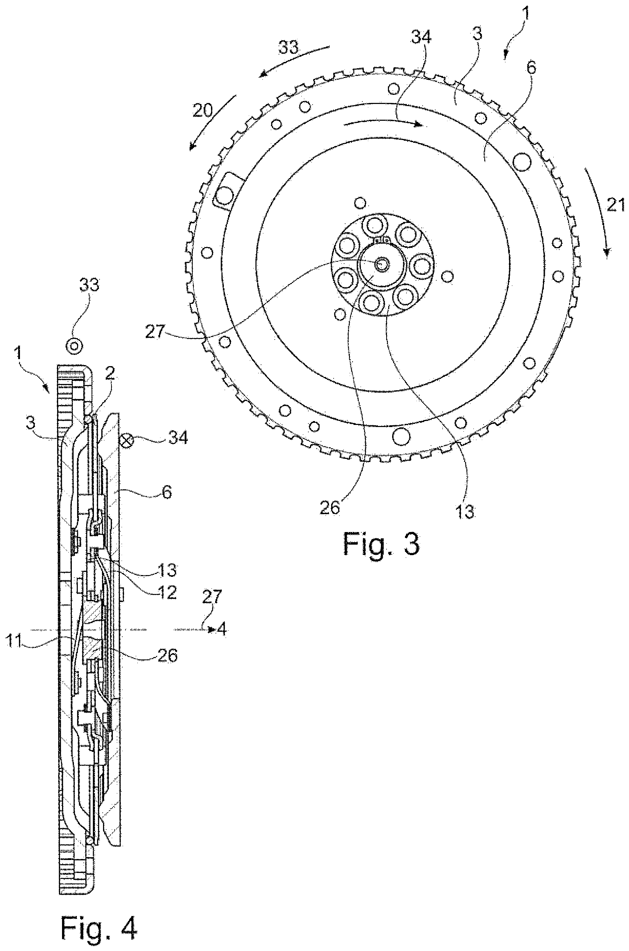

Fig. 3 zeigt die Reibungskupplung 1 nach Fig. 1 in einer Ansicht entlang der Drehachse 27. Fig. zeigt die Reibungskupplung 1 nach Fig. 3 in einer Seitenansicht im Schnitt. Gegenüber Fig. 1 und 2 sind hier zumindest die Gegenplatte 28 und Kupplungsscheibe 29 nicht dargestellt. Auf die Ausführungen zu Fig. 1 und 2 wird verwiesen.

Dargestellt ist die Drehrichtung 33 des Kupplungsdeckels 3 und die Bremsrichtung 34 der Anpressplatte 6. Die Reibungskupplung befindet sich im Zugbetrieb 31. Die in Fig. 4 dargestellte Bremsrichtung 34 der Anpressplatte 6 erstreckt sich in die Zeichnungsebene hinein, die Drehrichtung 33 aus der Zeichnungsebene heraus.

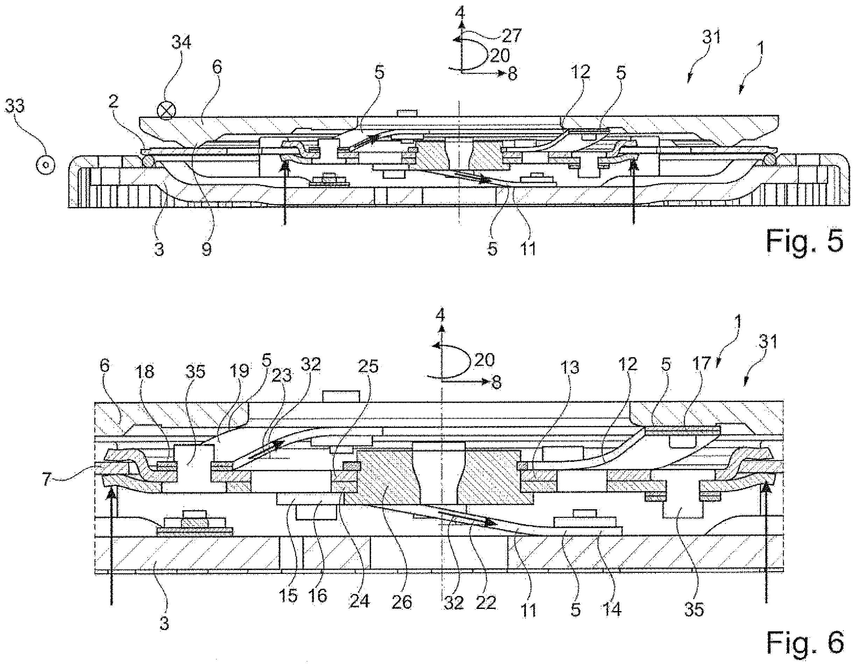

Fig. 5 zeigt die Reibungskupplung 1 nach Fig. 3 und 4 in einer Seitenansicht im Schnitt im Zugbetrieb 31. Fig. 6 zeigt eine Detailansicht der Fig. 5. Auf die Ausführungen zu Fig. 1 bis 4 wird verwiesen.

Es sind zwei Gruppen 11, 12 von Blattfedern 5 vorgesehen, nämlich kupplungsdeckelseitige (erste Gruppe 11) und anpressplattenseitige (zweite Gruppe 12) Blattfedern 5, die miteinander über ein Druckstück 13 verbunden sind, in dem die Zungen 7 der Tellerfeder 2 axialfest aufgenommen sind.

Hier ist ein anpressplattenseitiges Druckstück (zweite Druckstückscheibe 25) vorgesehen, das über (eine) anpressplattenseitige (zweite Gruppe 12 von) Blattfedern 5 drehfest an der Anpressplatte 6 angebunden ist, und ein kupplungsdeckelseitiges Druckstück (erste Druckstückscheibe 24), das über (eine) kupplungsdeckelseitige (erste Gruppe 11 von) Blattfedern 5 drehfest am Kupplungsdeckel 3 angebunden ist.

Die Blattfedern 5 der ersten Gruppe 11 sind mit einem ersten Ende 14 an dem Kupplungsdeckel 3 und mit einem zweiten Ende 15 an jeweils einer ersten Anbindung 16 an dem Druckstück 13 angebunden. Die Blattfedern 5 einer zweiten Gruppe 12 sind mit einem ersten Ende 17 an der Anpressplatte 6 und mit einem zweiten Ende 18 an jeweils einer zweiten Anbindung 19 an dem Druckstück 13 angebunden.

Die ersten Anbindungen 16 und die zweiten Anbindungen 19 sind entlang der axialen Richtung 4 zwischen der Anpressplatte 6 und dem Kupplungsdeckel 3 angeordnet.

Jede Blattfeder 5 der ersten Gruppe 11 erstreckt sich von dem ersten Ende 14 hin zu dem zweiten Ende 15 entlang einer ersten Umfangsrichtung 20 und jede Blattfeder 5 der zweiten Gruppe 12 von dem ersten Ende 17 hin zu dem zweiten Ende 18 entlang einer gleichgerichteten ersten Umfangsrichtung 20.

Die Blattfedern 5 der ersten Gruppe 11 erstrecken sich zwischen dem ersten Ende 14 und dem zweiten Ende 15 in der axialen Richtung 4 unter einem maximalen ersten Winkel 22 gegenüber einer Umfangsrichtung 20, 21 und die Blattfedern 5 der zweiten Gruppe 12 zwischen dem ersten Ende 17 und dem zweiten Ende 18 in der axialen Richtung 4 unter einem maximalen zweiten Winkel 23 gegenüber einer Umfangsrichtung 20, 21, wobei der erste Winkel 22 und der zweite Winkel 23 gleich groß sind.

Das Druckstück 13 besteht aus einer ersten Druckstückscheibe 24 und einer zweiten Druckstückscheibe 25, die miteinander über Nieten 35 verbunden sind, wobei die Zungen 7 der Tellerfeder 2 entlang der axialen Richtung 4 zwischen der ersten Druckstückscheibe 24 und der zweiten Druckstückscheibe 25 angeordnet sind.

Die Blattfedern 5 sind über Niete 35, und zwar über die Niete 35, die zur Verbindung der Druckstückscheiben 24, 25 miteinander vorgesehen sind, mit dem Druckstück 13 bzw. der jeweiligen Druckstückscheibe 24, 25 verbunden.

Die Tellerfeder 2 ist zum Verlagern der Anpressplatte 6 über das Druckstück 13 betätigbar. Das Druckstück 13 ist mit einer Nabe 26 verbunden, an der die Druckstückscheiben 24, 25 axialfest angeordnet sind. Das Druckstück 13 (und über das Druckstück 13 die Tellerfeder 2) kann also über die Nabe 26 betätigt werden.

Im dargestellten Zugbetrieb 31 zieht der Kupplungsdeckel 3 über die erste Gruppe 11 von Blattfedern 5 an dem Druckstück 13 in der ersten Umfangsrichtung 20 (siehe Kraftrichtung 32 und Drehrichtung 33, in Richtung aus der Zeichnungsebene heraus). Gleichzeitig zieht das Druckstück 13 (bzw. bremst die Anpressplatte 6 in der zweiten Umfangsrichtung 21, Bremsrichtung 34) über die zweite Gruppe 12 die Anpressplatte 6 in der ersten Umfangsrichtung 20.

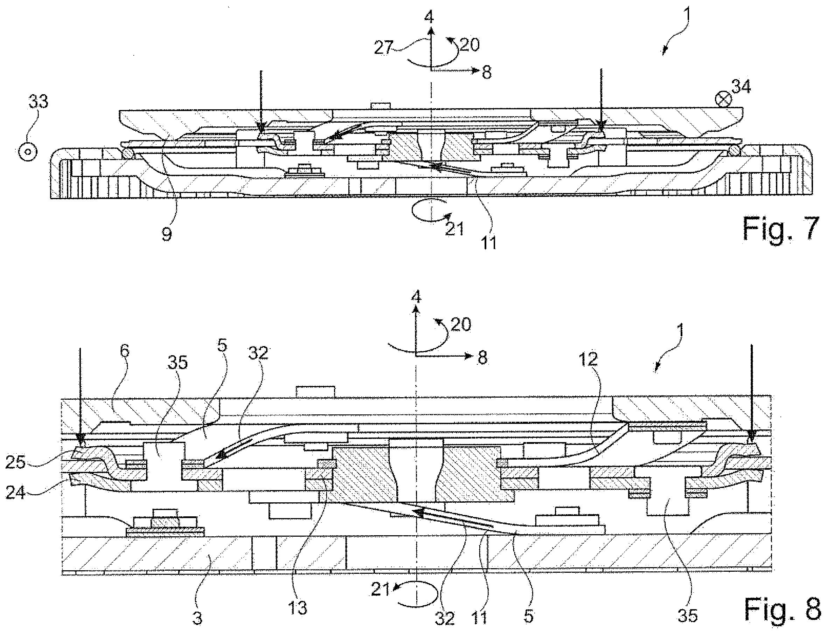

Die Winkel 22, 23 der Blattfedern 5 sind so gewählt, dass sie möglichst gleich und entgegengesetzt wirken. Im dargestellten Zugbetrieb 31 wirken die erzeugten Axialkräfte der Blattfedern 5 in die gleiche axiale Richtung 4 und drücken die Kupplung weiter zu, d.h. üben eine selbstverstärkende Kraft in Einrückrichtung aus (siehe in axialer Richtung 4 weisende Pfeile an Druckstück 13). Im Schubbetrieb (siehe Fig. 7 und 8) wirken die erzeugten Axialkräfte der Blattfedern 5 ebenfalls in die gleiche Richtung und ziehen die Reibungskupplung 1 auf, d.h. rücken die Reibungskupplung 1 aus.

Die Anpressplatte 6 leitet ihr Drehmoment über Blattfedern 5 (zweite Gruppe 12 von Blattfedern 5) in das mit Bezug auf die beigefügten Figuren unterhalb der Anpressplatte 6 liegende, d.h. anpressplattenseitige Druckstück 13 (zweite Druckstückscheibe 25), ein. Dieses Drehmoment wird über die Niete 35 der anpressplattenseitigen Blattfedervernietung in das kupplungsdeckelseitige Druckstück 13 (erste Druckstückscheibe 24), das mit Bezug auf die beigefügten Figuren unterhalb der Tellerfeder 2 angeordnet ist, eingeleitet. Dieses Druckstück 13 (erste Druckstückscheibe 24) ist über kupplungsdeckelseitige Blattfedern 5 (erste Gruppe 11 von Blattfedern 5) am Kupplungsdeckel 3 befestigt.

Fig. 7 zeigt die Reibungskupplung 1 nach Fig. 3 und 4 in einer Seitenansicht im Schnitt im Schubbetrieb 30. Fig. 8 zeigt eine Detailansicht der Fig. 7. Die Fig. 7 und 8 werden im Folgenden gemeinsam beschrieben. Auf die Ausführungen zu Fig. 5 und 6 wird verwiesen.

Im dargestellten Schubbetrieb 31 wird der Kupplungsdeckel 3 über die erste Gruppe 11 von Blattfedern 5 von dem Druckstück 13 in der zweiten Umfangsrichtung 21 (siehe Kraftrichtung 32, Bremsrichtung 34, in Richtung Zeichnungsebene heraus, und Drehrichtung 33, in Richtung Zeichnungsebene hinein) gezogen. Gleichzeitig wird das Druckstück 13 über die zweite Gruppe 12 von der Anpressplatte 6 in der zweiten Umfangsrichtung 21 gezogen. Im Schubbetrieb 31 wirken die erzeugten Axialkräfte der Blattfedern 5 (siehe in axialer Richtung 4 weisende Pfeile am Druckstück 13) ebenfalls in die gleiche Richtung und ziehen die Reibungskupplung 1 auf, d.h. rücken die Reibungskupplung 1 aus.

### Bezugszeichenliste

- 1: Reibungskupplung
- 2: Tellerfeder
- 3: Kupplungsdeckel
- 4: axiale Richtung
- 5: Blattfeder
- 6: Anpressplatte
- 7: Zunge
- 8: radiale Richtung
- 9: Anpressplattennocke
- 10: Freiwinkel
- 11: erste Gruppe
- 12: zweite Gruppe
- 13: Druckstück
- 14: erstes Ende (erste Gruppe)
- 15: zweites Ende (erste Gruppe)
- 16: erste Anbindung
- 17: erstes Ende (zweite Gruppe)
- 18: zweites Ende (zweite Gruppe)
- 19: zweite Anbindung
- 20: erste Umfangsrichtung
- 21: zweite Umfangsrichtung
- 22: erster Winkel
- 23: zweiter Winkel
- 24: erste Druckstückscheibe
- 25: zweite Druckstückscheibe
- 26: Nabe
- 27: Drehachse
- 28: Gegenplatte
- 29: Kupplungsscheibe
- 30: Schubbetrieb
- 31: Zugbetrieb
- 32: Kraftrichtung
- 33: Drehrichtung
- 34: Bremsrichtung
- 35: Niet
- 36: Getriebeeingangswelle

## Patentansprüche

1. Reibungskupplung (1) mit einer, die Reibungskupplung (1) einrückenden Tellerfeder (2), einem Kupplungsdeckel (3), und einer in axialer Richtung (4) begrenzt verlagerbaren, durch Blattfedern (5) drehfest an den Kupplungsdeckel (3) angebundenen Anpressplatte (6), **dadurch gekennzeichnet, dass**
die Blattfedern (5) in axialer Richtung (4) fest an Zungen (7) der Tellerfeder (2) angebunden sind.

2. Reibungskupplung (1) nach Anspruch 1, wobei die Blattfedern (5) in radialer Richtung (8) innerhalb von Anpressplattennocken (9) angeordnet sind, auf denen sich die Tellerfeder (2) verkippbar zum Ein- und Ausrücken der Reibungskupplung (1) abstützt.

3. Reibungskupplung (1) nach Anspruch 1 oder 2, wobei die drehfeste Anbindung der Anpressplatte (6) an den Kupplungsdeckel (3) unter einem gewissen Freiwinkel (10) erfolgt.

4. Reibungskupplung (1) nach zumindest einem der Ansprüche 1 bis 3, wobei zwei Gruppen (11, 12) von Blattfedern (5) vorgesehen sind, nämlich kupplungsdeckelseitige und anpressplattenseitige Blattfedern (5), die miteinander über ein Druckstück (13) verbunden sind, in dem die Zungen (7) der Tellerfeder (2) axialfest aufgenommen sind.

5. Reibungskupplung (1) nach Anspruch 4, wobei die Blattfedern (5) einer ersten Gruppe (11) mit einem ersten Ende (14) an dem Kupplungsdeckel (3) und mit einem zweiten Ende (15) an jeweils einer ersten Anbindung (16) an dem Druckstück (13) angebunden sind und die Blattfedern (5) einer zweiten Gruppe (12) mit einem ersten Ende (17) an der Anpressplatte (6) und mit einem zweiten Ende (18) an jeweils einer zweiten Anbindung (19) an dem Druckstück (13) angebunden sind.

6. Reibungskupplung (1) nach Anspruch 5, wobei die ersten Anbindungen (16) und die zweiten Anbindungen (19) entlang der axialen Richtung (4) zwischen der Anpressplatte (6) und dem Kupplungsdeckel (3) angeordnet sind.

7. Reibungskupplung (1) nach einem der vorhergehenden Ansprüche 5 und 6, wobei sich jede Blattfeder (5) der ersten Gruppe (11) von dem ersten Ende (14) hin zu dem zweiten Ende (15) entlang einer ersten Umfangsrichtung (20) und sich jede Blattfeder (5) der zweiten Gruppe (12) von dem ersten Ende (17) hin zu dem zweiten Ende (18) entlang der ersten Umfangsrichtung (20) erstreckt.

8. Reibungskupplung (1) nach einem der vorhergehenden Ansprüche 5 bis 7, wobei sich die Blattfedern (5) der ersten Gruppe (11) zwischen dem ersten Ende (14) und dem zweiten Ende (15) in der axialen Richtung (4) unter einem maximalen ersten Winkel (22) gegenüber einer Umfangsrichtung (20, 21) erstrecken und sich die Blattfedern (5) der zweiten Gruppe (12) zwischen dem ersten Ende (17) und dem zweiten Ende (17) in der axialen Richtung (4) unter einem maximalen zweiten Winkel (23) gegenüber einer Umfangsrichtung (20, 21) erstrecken, wobei der erste Winkel (22) und der zweite Winkel (23) gleich groß sind.

9. Reibungskupplung (1) nach einem der vorhergehenden Ansprüche 4 bis 7, wobei das Druckstück (13) zumindest aus einer ersten Druckstückscheibe (24) und einer zweiten Druckstückscheibe (25) besteht, die miteinander verbunden sind, wobei die Zungen (7) der Tellerfeder (2) entlang der axialen Richtung (4) zwischen der ersten Druckstückscheibe (24) und der zweiten Druckstückscheibe (25) angeordnet sind.

10. Reibungskupplung (1) nach einem der vorhergehenden Ansprüche 4 bis 8, wobei die Tellerfeder (2) zum Verlagern der Anpressplatte (6) über das Druckstück (13) betätigbar ist.

## Claims

1. A friction clutch (1) having a diaphragm spring (2) engaging the friction clutch (1), a clutch cover (3) and a pressure plate (6) which can be displaced to a limited extent in the axial direction (4) and is connected in a rotationally fixed manner to the clutch cover (3) by leaf springs (5), **characterised in that** the leaf springs (5) in the axial direction (4) are fixedly connected to tongues (7) of the diaphragm spring (2).

2. The friction clutch (1) according to claim 1, wherein the leaf springs (5) are arranged in the radial direction (8) within pressure plate lobes (9), on which the diaphragm spring (2) is tiltably supported for engaging and disengaging the friction clutch (1).

3. The friction clutch (1) according to claim 1 or 2, wherein the rotationally fixed connection of the pressure plate (6) to the clutch cover (3) takes place at a certain clearance angle (10).

4. The friction clutch (1) according to at least one of claims 1 to 3, wherein two groups (11, 12) of leaf springs (5) are provided, namely leaf springs (5) on the clutch cover side and on the pressure plate side, which are connected to one another via a pressure piece (13), in which the tongues (7) of the diaphragm spring (2) are received in an axially fixed manner.

5. The friction clutch (1) according to claim 4, wherein the leaf springs (5) of a first group (11) are connected with a first end (14) to the clutch cover (3) and with a second end (15) each to a first connection (16) on the pressure piece (13) and the leaf springs (5) of a second group (12) are connected with a first end (17) to the pressure plate (6) and with a second end (18) each to a second connection (19) on the pressure piece (13).

6. The friction clutch (1) according to claim 5, wherein the first connections (16) and the second connections (19) are arranged in the axial direction (4) between the pressure plate (6) and the clutch cover (3).

7. The friction clutch (1) according to any one of the preceding claims 5 and 6, wherein each leaf spring (5) of the first group (11) extends from the first end (14) towards the second end (15) in a first circumferential direction (20) and each leaf spring (5) of the second group (12) extends from the first end (17) towards the second end (18) in the first circumferential direction (20).

8. The friction clutch (1) according to any one of the preceding claims 5 to 7, wherein the leaf springs (5) of the first group (11) extend between the first end (14) and the second end (15) in the axial direction (4) at a maximum first angle (22) with respect to a circumferential direction (20, 21) and the leaf springs (5) of the second group (12) extend between the first end (17) and the second end (17) in the axial direction (4) at a maximum second angle (23) with respect to a circumferential direction (20, 21), wherein the first angle (22) and the second angle (23) are equal.

9. The friction clutch (1) according to any one of the preceding claims 4 to 7, wherein the pressure piece (13) consists of at least a first pressure piece disc (24) and a second pressure piece disc (25), which are connected to one another, wherein the tongues (7) of the diaphragm spring (2) are arranged in the axial direction (4) between the first pressure piece disc (24) and the second pressure piece disc (25).

10. The friction clutch (1) according to any one of the preceding claims 4 to 8, wherein the diaphragm spring (2) can be actuated via the pressure piece (13) in order to displace the pressure plate (6).

## Revendications

1. Embrayage à friction (1) avec un ressort à disque (2) en prise avec l'embrayage à friction (1), un couvercle d'embrayage (3) et un plateau de pression (6) qui peut être déplacé de manière limitée dans la direction axiale (4) et est relié de manière fixe en rotation au couvercle d'embrayage (3) par des ressorts à lames (5), **caractérisé en ce que** les ressorts à lames (5) dans la direction axiale (4) sont fermement reliés à des languettes (7) du ressort à disque (2).

2. Embrayage à friction (1) selon la revendication 1, dans lequel les ressorts à lames (5) sont disposés dans la direction radiale (8) à l'intérieur de cames à plateau de pression (9) sur lesquelles le ressort à disque (2) est supporté de manière basculante pour engager et désengager l'embrayage à friction (1).

3. Embrayage à friction (1) selon la revendication 1 ou 2, dans lequel la liaison fixe en rotation du plateau de pression (6) avec le couvercle d'embrayage (3) s'effectue selon un certain angle de jeu (10).

4. Embrayage à friction (1) selon au moins l'une quelconque des revendications 1 à 3, comportant deux groupes (11, 12) de ressorts à lames (5), à savoir des ressorts à lames (5) côté couvercle d'embrayage et côté plateau de pression, qui sont reliés entre eux par l'intermédiaire d'une pièce de pression (13), dans laquelle sont fixées de manière fixe axialement les languettes (7) du ressort à disque (2).

5. Embrayage à friction (1) selon la revendication 4, dans lequel les ressorts à lames (5) d'un premier groupe (11) sont reliés par une première extrémité (14) au couvercle d'embrayage (3) et par une seconde extrémité (15) à une première liaison (16) chacun sur la pièce de pression (13), et les ressorts à lames (5) d'un second groupe (12) sont reliés par une première extrémité (17) au plateau de pression (6) et par une seconde extrémité (18) à une seconde liaison (19) chacun sur la pièce de pression (13).

6. Embrayage à friction (1) selon la revendication 5, dans lequel les premières liaisons (16) et les secondes liaisons (19) sont disposées le long de la direction axiale (4) entre le plateau de pression (6) et le couvercle d'embrayage (3).

7. Embrayage à friction (1) selon l'une quelconque des revendications précédentes 5 et 6, dans lequel chaque ressort à lames (5) du premier groupe (11) s'étend depuis la première extrémité (14) à la seconde extrémité (15) le long d'une première direction circonférentielle (20) et chaque ressort à lames (5) du second groupe (12) s'étend de la première extrémité (17) vers la seconde extrémité (18) le long de la première direction circonférentielle (20).

8. Embrayage à friction (1) selon l'une quelconque des revendications précédentes 5 à 7, dans lequel les ressorts à lames (5) du premier groupe (11) s'étendent entre la première extrémité (14) et la seconde extrémité (15) dans la direction axiale (4) sous un premier angle maximum (22) par rapport à une direction circonférentielle (20, 21), et les ressorts à lames (5) du second groupe (12) s'étendent entre la première extrémité (17) et la seconde extrémité (17) dans la direction axiale (4) sous un second angle maximum (23) par rapport à une direction circonférentielle (20, 21), le premier angle (22) et le second angle (23) étant égaux.

9. Embrayage à friction (1) selon l'une quelconque des revendications précédentes 4 à 7, dans lequel la pièce de pression (13) est constituée d'au moins un premier disque de pièce de pression (24) et d'un second disque de pièce de pression (25) qui sont reliés l'un à l'autre, les languettes (7) du ressort à disque (2) étant disposées le long de la direction axiale (4) entre le premier disque de pièce de pression (24) et le second disque de pièce de pression (25).

10. Embrayage à friction (1) selon l'une quelconque des revendications précédentes 4 à 8, dans lequel le ressort à disque (2) peut être actionné par la pièce de pression (13) pour déplacer le plateau de pression (6).
